# EUROPEAN PATENT SPECIFICATION

(11) **EP 2 691 485 B1**
(45) Date of publication and mention of the grant of the patent: **23.09.2015**
(21) Application number: 12708204.8
(22) Date of filing: 21.02.2012
(51) Int. Cl.: C09D 175/02, C09D 175/04, C08K 5/10, C08K 5/105, C08K 5/523, C08K 5/526, F16L 55/164, F16L 55/1645, C08G 18/32, C08G 18/73, C08G 18/75

(54) **METHODS OF COATING DRINKING WATER PIPELINES AND PIGMENT DISPERSIONS COMPRISING ALKYL PHENYL ESTER COMPOUNDS**
BESCHICHTUNGSVERFAHREN FÜRTRINKWASSERLEITUNGEN UND PIGMENTDISPERSIONEN MIT ALKYL-PHENYL-ESTERVERBINDUNGEN
PROCÉDÉS DE REVÊTEMENT DE CONDUITES D'EAU POTABLE ET DISPERSIONS DE PIGMENTS COMPORTANT DES COMPOSÉS ALKYLE PHÉNYLE ESTERS

(30) Priority: 30.03.2011 US 201161469231 P; 20.04.2011 US 201161477259 P
(43) Date of publication of application: 05.02.2014
(73) Proprietor: 3M Innovative Properties Company, Saint Paul, MN 55133-3427 (US)
(72) Inventor: FORES, Stuart E., Bracknell, Berkshire RG12 8HT (GB); ROBINSON, Ian, Bracknell, Berkshire RG12 8HT (GB)
(74) Representative: Vossius & Partner Patentanwälte Rechtsanwälte mbB
(86) International application number: PCT/US2012/025921
(87) International publication number: WO 2012/134662

(56) References cited:
- EP-A1- 0 570 798
- EP-A2- 1 486 522
- US-A1- 2010 266 764

## Description

### BACKGROUND

Trenchless methods for structural renovation of drinking water pipelines include the pipe in pipe method, pipe bursting method, and polyethylene thin wall lining method. As described in U.S. Patent No. 7,189,429, these methods are disadvantaged by their inability to deal with multiple bends in a pipeline and the fact that lateral connection pipes to customers' premises have to be disconnected and then reinstated after execution of the renovation process.

U.S. Patent No. 7,189,429 describes a method of forming a coating on the internal surface of a drinking water pipeline, the method comprising the steps of: a) providing a liquid, two-part coating system; b) mixing together the first part and the second part to form a mixture, and c) applying the mixture as a coating to said surface so as to form, at high cure rate, a monolithic lining which exhibits high strength and flexibility. Preferably the two parts of the system are applied through heated airless spray equipment. Such equipment may, for example, include a centrifugal spinning head or a self-mixing spray gun assembly.

U.S. Patent No. 6,730,353 describes a coating for drinking water pipelines. The two-part coating system comprises a first part comprising one or more aliphatic polyisocyanates, optionally blended with one or more amine reactive resins and/or non reactive resins, and a second part comprising one or more aromatic polyamines optionally blended with one or more oligomeric polyamines, such that the two parts, when mixed together and applied to the internal surfaces of pipelines, form a rapid setting impervious coating suitable for contact with drinking water.

WO2010/120617 describes methods of forming a coating on (e.g. internal) surfaces of a (e.g. drinking water) pipeline with two-part coating compositions comprising a first part comprising at least one polyisocyanate and a second part comprising at least one aspartic acid ester. Also described is a reactive two-part coating composition that comprises a first part comprising at least one polyisocyanate; and a second part comprising at least one aspartic acid ester and at least one aromatic amine that is solid at 25°C.

As described for example in WO 2010/120617, "The first and/or second part may comprise various additives as are known in the art, provided the inclusion of such is permitted with the requirements of the NSF/ANSI Standard. For example, pigments, dispersing and grinding aids, water scavengers, thixotropes, defoamers, etc. can be added to improve the manufacturability, the properties during application and/or the shelf life."

Two- part coating compositions for drinking water pipelines have been commercially available from 3M wherein the first part comprises at least one polyisocyanates and a pigment dispersion comprising titanium dioxide and a liquid epoxy resin commercially available from Dow under the trade designation "DER331".

Document EP 1 486 522 A2 describes a method for the renovation of existing drinking water pipelines by means of the application of a liquid, two part coating composition to the internal surface of the pipeline. In EP 1 486 522 A2, the problem of flavour and odour of the coating is reported (see tables 3 and 6 of EP 1 486 522 A2). The examples of tables 1, 4 and 7 of EP 1 486 522 A2 disclose compositions comprising an aliphatic polyisocyanate, epoxy resins, pigments and a branched polyether-ester polyol.

### SUMMARY

Although various two-part coating compositions for drinking water pipelines comprising additives have been described, industry would find advantage in alternative additives that do not impart flavor or odor.

In one embodiment, a method of forming a coating on a surface of a pipeline is described. The method comprises providing a coating composition comprising a first part comprising at least one aliphatic polyisocyanate, and a second part comprising at least one diamine; wherein the coating composition comprises one or more alkyl phenyl ester compounds wherein the alkyl group comprises at least 8 carbon atoms; combining the first part and the second part to form a liquid mixture; applying the liquid mixture to internal surfaces of the pipeline; and allowing the mixture to set forming a cured coating.

In another embodiment, a pipeline (e.g. for drinking water) is described comprising the reaction product of the described coating.

In each of these embodiments, the alkyl phenyl ester compound preferably has the general formula

R-L-Ph

wherein R is an alkyl group comprising at least 8 carbon atoms,
L is a divalent linking group, and
Ph is phenyl.

In some favored embodiments, the alkyl group comprises at least 10 or 12 carbon atoms.

Two-part compositions described herein are believed to comply with the requirements of NSF/ANSI Standard 61 - 2008.

### DETAILED DESCRIPTION

The present invention provides a method where a two-part coating system is applied to internal pipeline surfaces so as to form, at a high cure rate, an impervious lining suitable for contact with drinking water. By virtue of its rapid setting characteristics and insensitivity to moisture, the system used in the method of the present invention is particularly useful as an "in-situ" applied lining for refurbishment of existing drinking water pipelines.

The first part of the two-part coating composition generally comprises at least one polyisocyanate and the second part comprises at least one polyamine (e.g. diamine). After application and curing, the coating composition comprises the reaction product of such first and second components. The reacted coating comprises urea groups (-NR-C(O)-NR-). Polymers containing urea groups are often referred to as polyureas. When the two-part coating composition comprises other isocyanate reactive or amine reactive components, the reacted coating may comprise other groups as well.

The coating composition, and typically the first (i.e. isocyanate-containing) part, further comprises one or more alkyl phenyl ester compounds. Unlike butyl phthalates and di-2-ethyl hexyl phthalate (DEHP), the alkyl phenyl ester compounds described herein comprise an alkyl group having at least 8 carbon atoms.

The alkyl phenyl ester compounds typically have the general formula

R-L-Ph

wherein R is an alkyl group comprising at least 8 carbon atoms, L is a divalent linking group, and Ph is phenyl. In some favored embodiments, R has at least 10 or 12 carbon atoms.

One suitable class of compounds can be represented by the general formula 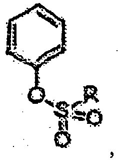 wherein R is an alkyl group comprising at least 8, 10 or 12 carbon atoms. This class of compounds is referred to as alkyl sulfonic esters of phenol. This class of compound is derived from phenol, rather than phthalic acid. Unlike phthalates that can be characterized as diesters, having two alkyl terminal groups each bonded to a phenol ring via an ester linking group, the alkyl phenyl ester compounds described herein are generally mono-ester or specifically mono-sulfoesters.

The alkyl phenyl ester compounds are typically commercially available as a mixture of compounds having alkyl group ranging from at least 8, 10 or 12 carbon atoms to about 24 carbons atoms. In some embodiments, at least about 30% of the mixture comprises molecules with an alkyl group having at least 14, 15, or 16 carbon atoms. In some embodiments, less than 5, 4, 3, 2, or 1 wt-% of the mixture comprises molecules having 18 carbon atoms or greater.

One illustrative commercially available compound is available from Lanxess, Pittsburg, PA under the trade designation "Mesamoll".

In some embodiments, the alkyl phenyl ester compound(s) is present in the composition described herein as an unreactive additive. For example, it has been found that such alkyl phenyl ester compounds are a suitable replacement for bisphenol A based epoxy resins in pigment dispersions. In this embodiment, the (e.g. pipeline) coating compositions and isocyanate portion thereof are free of (e.g. reactive) components derived from bisphenol A. The (i.e. cured) coating compositions advantageously impart little or no odor in combination with little or no flavor to water.

When making a pigmented two-part (e.g. polyurea) composition, it is typically not desirable to add the pigment directly to an isocyanate component because heat generated due to the mixing can induce homopolymerization of the isocyanate component.

Hence, a pigment dispersion is described comprising a pigment and one or more alkyl phenyl ester compounds, as described herein.

A pigment is any substance, usually in the form of a dry powder, that imparts color to another substance of mixture. With the exception of some natural organic pigments, most pigments are insoluble in organic solvents and water. As used herein, pigment refers to a material having a positive colorant value, exclusive of whiting barites, clays, and talc. Some pigments (such as zinc oxide and carbon black) are also reinforcing agents. The pigments of the pigment dispersion described herein preferably comprise an inorganic substance that imparts colors such as a metallic oxide including iron oxide, zinc oxide, and particularly titanium dioxide. Although pigment dispersions of other metal oxides such as cobalt and chromium or lead chromates would be suitable for other two-part coating compositions, pigments containing heavy metal would not be utilized in coatings for drinking water pipelines.

When the pigment is of a suitable particle size, a dispersion may be made by combining the pigment and the alkyl phenyl ester compound(s), such as by use of a high speed mixer.

When a relatively small pigment particle size is desired, pigment dispersions can be made by milling the pigment in the dispersion alkyl phenyl ester compound medium. The contents of the milling mixture may include the mill grind and a milling media. The mill grind includes the pigment and alkyl phenyl ester compound(s).

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can include particles, preferably substantially spherical in shape, e.g., beads consisting essentially of a polymeric resin or yttrium stabilized zirconium oxide beads.

After milling is completed, the milling media is separated from liquid dispersion using conventional separation techniques, such as by filtration, sieving through a mesh screen, and the like. Often the sieve is built into the mill, e.g., for a bead mill. The milled pigment concentrate is preferably separated from the milling media by filtration.

The milling and/or mixing time can vary widely and depends upon the pigment, mechanical means and residence conditions selected, the initial and desired final particle size, etc. For embodiments wherein the coating composition or isocyanate portion thereof is transparent, pigment dispersions with an average particle size of less than 100 nm are typically favored.

In the process of mixing and/or milling the pigment dispersion, each process is typically performed with cooling to prevent build up of heat.

The pipe coating composition or isocyanate portion thereof may contain more than one pigment, prepared using separate dispersions for each pigment, or alternatively several pigments may be mixed and/or co-milled in preparing the dispersion.

The preferred amounts and ratios of the ingredients of the pigment dispersion will vary widely depending upon the specific materials and the intended applications. The pigment dispersion process can be carried out in a continuous, batch or semi-batch mode.

The pigment dispersions described herein are preferably non-aqueous and free of solvent. The concentration of pigment is typically less than the concentration of alkyl phenyl ester compound(s) in the pigment dispersion. The pigment to alkyl phenyl ester compound weight ratio typically ranges from about 1:4 to about 1:2. When the pigment is titania, the concentration of titantia in the dispersion typically ranges from about 50 to about 70 wt-%.

In general, it is typically desirable to make a concentrated pigment dispersion, which is subsequently diluted to the appropriate concentration for use in the coating composition or isocyanate portion thereof. This technique permits preparation of a greater quantity of pigment dispersion from the equipment. B y dilution, the desired color or the coating composition or isocyanate portion is achieved.

Having a difference in color between the first and second part is also beneficial as a visual indication of good mixing. For example, when the first part is white, for example by inclusion of titania, and the second part is black, an opaque, uniformly grey, coating is obtained upon sufficient mixing (lacking white or black streaks).

When the one or more alkyl phenyl ester compounds are present in the composition described herein as an unreactive additive, the concentration is typically relatively low. For example, the concentration of alkyl phenyl ester compounds may range from about 0.2 to about 5 wt-% of the total coating composition. In some embodiments, the concentration of alkyl phenyl ester compound(s) is no greater than 4 wt-%, or 3 wt-%, 2 wt-%, or 1 wt-%. When the concentration of alkyl phenyl ester compound(s) is sufficiently low, the inclusion of such has no substantial effect on the physical properties of the cured coating. When the pipe coating composition is utilized as a "structural liner", the cured coating typically has high strength in combination with a low elongation at break. Alternatively, compositions with increased flexibility, as evidenced by higher elongations at break, can be utilized as "semi-structural" or "interactive" liners. Such coating compositions typically comprise a small concentration of alkyl phenyl ester compounds, as just described.

In other embodiments, the pipe coating composition is utilized as a "non-structural" coating. In this embodiment, the pipe coating is only required to provide a water impervious barrier between the flowing water and internal surfaces of the pipe. In this embodiment, the pipe coating composition may comprise higher concentration of alkyl phenyl ester compound(s). For example, the alkyl phenyl ester compounds may be present in an amount ranging from 5 wt-% to 20 wt-% of the total coating composition. This embodiment is amenable to providing coating compositions and isocyanate portions thereof that are free of phthalate plasticizers, particularly those bearing, C4 or C6 or C8 alkyl groups. In some embodiments, the concentration of alkyl phenyl ester compound(s) is no greater than 25 wt-%, 20 wt-%, or 15 wt-% of the first (i.e. isocyanate) part. Depending on weight ratio of the first to the second part, the concentration of alkyl phenyl ester compound(s) of the total composition may be no greater than about 12.5 wt-% or 10 wt-% or 7.5 wt-%.

The first part of the two-part coating comprises one or more polyisocyanates. "Polyisocyanate" refers to any organic compound that has two or more reactive isocyanate (--NCO) groups in a single molecule such as diisocyanates, triisocyanates, tetraisocyanates, etc., and mixtures thereof. Cyclic and/or linear polyisocyanate molecules may usefully be employed. The polyisocyanate(s) of the isocyanate component are preferably aliphatic.

Suitable aliphatic polyisocyanates include derivatives of hexamethylene-1,6-diisocyanate; 2,2,4-trimethylhexamethylene diisocyanate; isophorone diisocyanate; and 4,4'-dicyclohexylmethane diisocyanate. Alternatively, reaction products or prepolymers of aliphatic polyisocyanates may be utilized.

The first part generally comprises at least one aliphatic polyisocyanate. Such aliphatic polyisocyanate typically comprises one or more derivatives of hexamethylene-1,6-diisocyanate (HDI). In some embodiments, the aliphatic polyisocyanate is a derivative of isophorone diisocyanate. The aliphatic polyisocyanate may comprise an uretdione, biuret, and/or isocyanurate of HDI.

In some embodiments, the first part comprises at least one solvent-free aliphatic polyisocyanate(s) that is substantially free of isocyanate (HDI) monomer, i.e. less than 0.5 % and more preferably no greater than 0.3 % as measured according to DIN EN ISO 10 283. Various solvent-free aliphatic polyisocyanate(s) are available. One type of HDI uretdione polyisocyanate, is available from Bayer Material Science LLC, Pittsburg, PA (Bayer) under the trade designation "Desmodur N 3400". Another HDI polyisocyanate is a trimer, reported to have a viscosity of about 1200 mPas at 23°C is available from Bayer under the trade designation "Desmodur N 3600". Such polyisocyanates typically have an isocyanate content of 20-25%. Another polyisocyanate is an aliphatic prepolymer resin comprising ether groups, based on HDI, reported to have a viscosity of 2500 mPas at 23°C is available from Bayer under the trade designation "Desmodur XP 2599". Yet another aliphatic polyisocyanate resin based on HDI is available from Bayer under the trade designation "Desmodur N3800". This material has an NCO content of 11% and a viscosity of 6,000 mPa.s at 23°C. Yet another aliphatic polyisocyanate resin based on HDI and isophorone diisocyanate is available from Bayer under the trade designation "Desmodur NZ1". This material has an NCO content of 20% and a viscosity of 3,000 mPa.s at 23°C.

In some embodiments, the kinds and amount of components of the first part are selected to provide a structural liner. In this embodiment, the first part may comprise a mixture of a first aliphatic polyisocyanate prepolymer having a viscosity of at least 2,000 or 2,500 mPa.s at 23°C, such as "Desmodur XP 2599", in combination with a lower viscosity polyisocyanate, having a viscosity of no greater than 1,500 mPa.s at 23°C, such as "Desmodur N 3600". The lower viscosity aliphatic polyisocyanate prepolymer is typically present at a weight ratio ranging from about 1:1 or 2:1 to 4:1 with a ratio of about 3:1 being preferred. In another embodiment, the first part comprises a mixture of first aliphatic polyisocyanate prepolymer having a viscosity of at least 2,000 or 2,500 mPa.s at 23°C, such as "Desmodur XP 2599", in combination with a higher viscosity polyisocyanate, having a viscosity of at least 3,000 mPa.s at 23°C such as "Desmodur NZ1". The higher viscosity polyisocyanate is typically present at a weight ratio ranging from about 2:1 to 1:2 with a ratio of about 2:1 being preferred.

In other embodiments, the kinds and amount of components of the first part are selected to provide a "semi-structural" liner. In this embodiment, the first part may comprise a mixture of Desmodur N 3400 and Desmodur XP 2599 at a weight ratio of about 1:1 to 1:2.

In yet other embodiments, the kinds and amounts of components of the first part are selected to provide a "non-structural" coating. In this embodiment, the first part may comprise a low viscosity aliphatic polyisocyanate such as "Desmodur N3400" or "DesmodurN3600".

In some embodiments, the first part is substantially free of other "amine reactive resin(s)" i.e. a resin containing functional groups capable of reacting with primary or secondary amines. The first part may also be free of epoxy functional compounds and compounds containing unsaturated carbon-carbon bonds capable of undergoing "Michael Addition" with polyamines, (e.g. monomeric or oligomeric polyacrylates). The first part may optionally comprise other non-reactive resins (i.e. in addition to the alkyl phenyl ester compound(s). In some embodiments, the composition is free of other non-reactive resins.

The second part of the two part coating comprises one or more polyamines. As used herein, polyamine refers to compounds having at least two amine groups, each containing at least one active hydrogen (N-H group) selected from primary amine or secondary amine. In some embodiments, the second component comprises or consists solely of one or more secondary amines.

In a preferred (e.g. structural) coating composition, the amine component comprises at least one aliphatic cyclic secondary diamine. Unlike aspartic acid ester, the secondary amine substituents lack ester groups.

In one embodiment, the second part comprises one or more aliphatic cyclic secondary diamines that comprise two, optionally substituted, hexyl groups bonded by a bridging group. Each of the hexyl rings comprise a secondary amine substituent.

The aliphatic cyclic secondary diamine typically has the general structure: 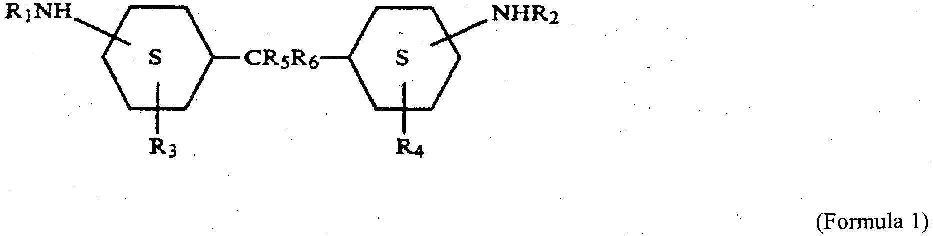
wherein R₁ and R₂ are independently linear or branched alkyl groups, having 1 to 10 carbon atoms. R₁ and R₂ are typically the same alkyl group. Representative alkyl groups include methyl, ethyl, propyl, isopropyl, butyl, isobutyl, secondary butyl, tertiary butyl, and the various isomeric pentyl, hexyl, heptyl, octyl, nonyl, and decyl groups. The symbol "S" in the center of the hexyl rings indicates that these cyclic groups are saturated. The preferred R₁ and R₂ contain at least three carbons, and the butyl group is particularly favored, such as a sec-butyl group.
R₃, R₄, R₅ and R₆ are independently hydrogen or a linear or branched alkyl group containing 1 to 5 carbon atoms. R₃, and R₄ typically the same alkyl group. In some embodiments, R₅ and R₆ are hydrogen. Further. Is some embodiments, R₃, and R₄ are methyl or hydrogen.

The substituents are represented such that the alkylamino group may be placed anywhere on the ring relative to the CR₅R₆ group. Further, the R₃ and R₄ substituents may occupy any position relative to the alkylamino groups. In some embodiments, the alkylamino groups are at the 4,4'-positions relative to the CR₅R₆ bridge. Further, the R₃ and R₄ substituents typically occupy the 3- and 3'-positions.

Commercially available aliphatic cyclic secondary diamines having this structure include:

| **Chemical Tradename (Supplier, Location)** | **Name** | **Chemical Structure** |
|---|---|---|
| "Clearlink 1000" (Dorf Ketal Chemicals LLC, Stafford, TX) | Cyclohexanamine, 4,4'-methylenebis(N-(1-methylpropyl)- | 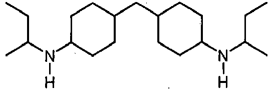 |
| "Clearlink 3000" (Dorf Ketal Chemicals LLC) | 3,3'-dimethylcyclohexanamine, 4,4'-methylenebis(N-(1-methylpropyl)- | 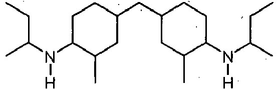 |

In other embodiments, the second part may comprise one or more aliphatic cyclic secondary diamines that comprise a single hexyl ring such as described in U.S. Patent application 61/469,231 filed March 30, 2011; incorporated herein by reference.

In some embodiments, one or more aliphatic cyclic secondary diamine(s) are the sole isocyanate-reactive component(s). For example, the isocyanate-reactive component of the second part may include a single species or a mixture of species according to Formula 1.

In some embodied (e.g. structural) pipe coating compositions, the second part typically comprises at least 20 wt-% or 25 wt-% of aliphatic cyclic secondary diamine with the remainder of the second part comprising a major amount of filler and a minor amount of optional additives, such as pigments. In some embodiments, the second part may comprise no greater than 30 wt-%, 35 wt-%, 40 wt-% or 45 wt-% of aliphatic cyclic secondary diamine.

When the second part comprises solely one or more aliphatic cyclic secondary diamines, the first part may be free of aromatic amine-reactive resins. Although the alkyl phenyl ester additive comprises an aromatic group, such compound is unreactive.

In other embodiments, an aliphatic cyclic secondary diamine can be combined with one or more acyclic aliphatic linear (such as "Ethacure 90) or branched polyamines.

In other (e.g. semi-structural) embodiments, the second part comprises one or more aromatic diamines. The aromatic polyamine employed can be any organic compound containing at least two primary or secondary amine groups, wherein said amine groups are substituted directly to an aromatic moiety. Suitable aromatic polyamines include diethyl toluenediamine; dimethylthio toluenediamine; 4,4'-methylenebis (2-isopropyl-6-methylaniline); 4,4-methylenebis (2,6-diisopropylaniline); 4,4-methylenebis (2,6-dimethylaniline); 4,4-methylenebis (2,6-diethylaniline); 4,4-methylenebis (2-ethyl-6-methylaniline); 4,4-methylenebis (3-chloro-2,6-diethylaniline). Such aromatic diamines are commercially available from various suppliers including Lonza Group Ltd, Basel, Switzerland. In some embodiments, one or more aromatic diamines are the sole isocyanate-reactive component of the component of the second part of the coating composition.

In some embodiments, the second part comprises solely one or more polyamines (e.g. diamines) and is free of other isocyanate-reactive components such as hydroxyl-functional components. Hence, the reaction product may be characterized as a polyurea, in contrast to a polyurethane.

The first and/or second part typically comprises a filler. A filler is a solid, insoluble material often employed to add bulk volume or to extend the pigments capabilities without impairing the reactive chemistry of the coating mixture. Unlike pigments that have desirable optical properties and are often relatively expensive, fillers typically do not possess such optical properties and are generally less expensive than pigments. Many fillers are natural inorganic minerals such as talc, clay, calcium carbonate, kaolin, whiting, and silica. Other exemplary fillers includes ceramic microspheres, hollow polymeric microspheres such as those available from Akzo Nobel, Duluth, GA under the trade designation "Expancel 551 DE"), and hollow glass microspheres (such as those commercially available from 3M Company, St. Paul, Minn. under the trade designation "K37". Hollow glass microspheres are particularly advantageous because they demonstrate excellent thermal stability and a minimal impact on dispersion viscosity and density.

In some embodiments, a filler, such as calcium magnesium carbonate or calcium carbonate, is employed in the first part at a concentration of at least 5 wt-%, or 10 wt-%, 15 wt-%, or 20 wt-% to about 40 wt-%. In some embodiments, both the first and second part comprise filler. The second part may comprise filler at an even higher concentration than the first part. The filler concentration of the second part may ranges from about 50 wt-% to about 70 wt-%.

Other filler may be more or less dense than calcium carbonate. Overall the total composition typically comprises at least about 5%, 10% or 15% to about 45% by volume inorganic particulate filler.

The first and/or second part may comprise various additives as are known in the art, provided the inclusion of such is permitted with the requirements of the NSF/ANSI Standard. For example, pigments, dispersing and grinding aids, water scavengers, thixotropes, defoamers, etc. can be added to improve the manufacturability, the properties during application and/or the shelf life.

The stoichiometry of the polyurea reaction is based on a ratio of equivalents of isocyanate of the first component to equivalents of amine of the second component. The first and second components are reacted at a stoichimetric ratio of at least about 1:1. Preferably, the isocyanate is employed in slight excess, such that the first part is combined with the second part at a ratio of 1.05 to 1.35 equivalents isocyanate to amine. The first part is generally combined with the second part at a volume ration of about 1:1 to 2.5:1.

The first and second parts are preferably each liquids at temperatures ranging from 5°C to 25°C. In view of the confined spaces within the pipeline and the resultant lack of suitable outlet for vapor, both the first part and the second part are substantially free of any volatile solvent. That is to say, solidification of the system applied to the pipeline interior is not necessitated by drying or evaporation of solvent from either part of the system. To further lower the viscosity, one or both parts can be heated. Further, the coating composition has a useful shelf life of at least 6 months, more preferably, at least one year, and most preferably, at least two years.

In some embodiments, the coating compositions described herein are particularly suitable for water distribution pipes, typically having a diameter ≥ 3 inches (7.6 cm) up to about 36 inches (91 cm). The following table describes typical and preferred properties of cured coating compositions for water distribution pipes as determined by the test methods described in the examples.

### Preferred Performance Ranges for Structural Pipe Coatings

| **Physical Property** | **Typical Property** | **Preferred Range** | **ASTM F 1216-09 initial physical property target** |
|---|---|---|---|
| **Coating Thickness** | 1 - 15 | n/a | n/a |
| **Film Set Time** | 30 - 180 seconds | 30 - 120 seconds | n/a |
| **Tensile Strength (MPa)** | 20 - 45 | 25 - 45 | > 21 |
| | | 35 - 45 | |
| **Elongation at Break** (%) | 1 - 30 | 2 - 10 | n/a |
| **Flexural Modulus** (MPa) | 1700 - 4500 | 2000 - 4500 | >1700 |
| **Flexural Strength** (MPa) | 30 - 60 | 40 - 60 | > 30 |
| **Glass Transition Temperature (Tg)** | 25 -160 | 75 - 160 | n/a |
| **Water Absorption (%)** | < 2% | <1.5 | n/a |

### Preferred Performance Ranges for Semi -Structural Pipe Coatings

| **Physical Properties** | **Preferred Property** | **More Preferred Property Range** |
|---|---|---|
| **Coating Thickness** | 1 - 6 mm | 3 - 4 mm |
| **Film Set Time** | 2 - 3 minutes | |
| **Tensile Strength** (MPa) | 10 - 30 MPa | 15 - 25 MPa |
| **Elongation at Break** (%) | 30- 50% to 125 -150% | 60-90% |
| **Flexural Strength** (MPa) | 10 to 20-30 MPa | 15-25% |
| **Flexural Modulus** (MPa) | 500-1000 MPa | 600-800 MPa |
| **Hardness** | 60-80 Shore D | 65-75 Shore D |
| **Impact Resistance** 120 mil (3 mm) film thickness | at least 10 J | at least 15 J |
| **Coefficeint of Thermal Expansion** | less than 200 ppm | |
| **Water Absorption** | <2% | <1.5 |

The coating compositions described herein advantageous provide these desired properties while complying with NSF/ANSI Standard 61-2008 (i.e. the standard for the United States) and are also believed to comply with Regulation 31 of the Water Supply (Water Quality) Regulations (i.e. the standard for the United Kingdom).

The coating composition is typically applied directly to the internal surfaces of a pipe without a primer layer applied to the surface. This can be done using various spray coating techniques. Typically, the amine component and the isocyanate component are applied using a spraying apparatus that allows the components to combine immediately prior to exiting the apparatus. In carrying out the method of the invention, the first and second parts of the system are fed independently, e.g. by flexible hoses, to a spraying apparatus capable of being propelled through an existing pipeline to be renovated. For example, a remote controlled vehicle, such as described in US 2006/0112996, may enter the pipeline to convey the spraying apparatus through the pipeline. The apparatus preferably heats the two parts of the system prior to application to the pipeline interior and mixes the two parts immediately before applying the mixture to the interior surface of the pipeline. The mixture of the two parts cures on the interior surface of the pipeline to form a (e.g. monolithic) water impervious lining. Such linings may be formed when the pipeline is initially laid, or after a period of use when the pipeline itself begins to deteriorate. Notably, the composition described herein can be applied at a caliper of at least 5 mm in a single pass forming a cured continuous lining.

A variety of spray systems may be employed as described in the art. In some embodiments, a heated airless spray apparatus, such as a centrifugal spinning head is employed. An airless, impingement mixing spray system generally includes the following components: a proportioning section which meters the two components and increases the pressure to above about 1500 psi (10.34 MPa); a heating section to raise the temperatures of the two components (preferably, independently) to control viscosity; and an impingement spray gun which combines the two components and allows mixing just prior to atomization. In other embodiments, a heated air vortex spray apparatus can be used to apply the coating.

In some embodiments and in particular when the liquid mixture is applied by spraying, the first and second part typically each have a (Brookfield) viscosity ranging from about 5,000 centipoise to about 60,000 cps, using spindle 6 at the temperature at which the liquid mixture is applied. The temperature at which the liquid mixture is applied typically ranges from about 15°C to 50°C.

Viscosity behavior of the each of the two components is important for two part spray-coating processes. With impingement mixing, the two parts should be as close as possible in viscosity at high shear rates to allow adequate mixing and even cure. The plural component static mix/spray system appears to be more forgiving of viscosity differences between the two components. Characterization of viscosities as functions of shear rate and temperature can help with decisions as to starting point for temperatures and pressures of the coatings in the two part spray equipment lines.

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

These abbreviations are used in the following examples: s=seconds, min = minute, ppb=part per billion, hr = hour, L= liter, mL = milliliter; wt = weight, gpm=gallons per minute, V=volts, cP=centipoise, MPa=megapascals, RPM=revolutions per minute, HP=horsepower.

### Test Methods

### 1. Flexural Modulus and Strength ASTM D790-07

Instron with a 5 kN load cell was used along with Bluehill software to report both values. The test specimens were 120 mm x 10 mm x 4 mm injection molded bars ("Teflon" molds). The support span was 64 mm and the crosshead speed was 1.7 mm/min.

### 2. Tensile Strength at Break and Elongation at Break ASTM D638-08

Instron with Fixed Grips, 5 kN load cell. Type I Class C Extensometer was used to determine Poisson's Ratio. Bluehill Software was used to report both values. Test specimen was Type IV with a thickness of 3.3 ± 0.1 mm, injection molded into a "Teflon" die. Speed of testing was 2 in/min and conditioning was to allow samples to cure for 7 days in desiccator.

### 3. Hardness-Shore D ASTM D2240-05

Type D Ergo Style Analog Durometer Model 409 was used with a conical indentor. No operating stand was used. Instead it was hand held as per section 9.2. No additional mass used and conditioning was to allow samples to cure for 7 days. Testing was done at room conditions.

### 4. Glass Transition Temperature (Tg) ASTM D7028-07

Composites were measured by dynamic mechanical analysis using a Seiko DMS 200 with a heating rate of 2 °C/min. Conditioning was to allow the samples to cure for 7 days in a desiccator.

### 5. Impact Resistance ASTM D2794-93

BYK Heavy-Duty Impact Tester was used with indenter diameter of 0.625 in, guide tube of 40 in, weights of 2, 4, and 8 lbs. The test specimen substrate was 4" x 4" x ¼" bead blasted cold rolled steel. This is a deviation from the ASTM which calls for 24 gage steel panels treated with a conversion coating. Coating thickness as indicated in Table 5. Conditioning was to allow samples to cure for 7 days at 23°C and 50% relative humidity. Failure was determined using magnification. Copper sulfate solution and pinhole detectors were not used.

### 6. Water Absorption ASTM D570-98 Water Absorption of Plastics

The test specimen was the section 5.2 ISO standard specimen. Procedure 7.1 was used - 24 hr immersion in 23 ± 1°C deionized water. Conditioning was to cure for 7 days in a desiccator and reconditioning was another 7 days in a desiccator. The average weight increase and soluble matter lost of 4 samples was reported.

### 7. Abrasion Resistance (mg loss/1000 cycles) ASTM D4060-07 using CS 17 wheels.

8. Viscosity was measured at various temperatures, RPM's and spindles as indicated in Table 3 using a Brookfield DV+II Pro viscometer commercially available from Brookfield Engineering Laboratories, Inc., Middelboro, MA.

9. **Density** was measured using an Accupyc 1330 gas pycnometer from Micromeritics Norcross, GA.

10. **Flavor and odor** screening tests were carried out using a modified version of British Standard BS6920-2.2.1:2000. Modifications included smaller number of people panels and a change in the volume of water as described below.

Four 100mm x 25mm glass panels were coated on both sides with the Part A: Part B mixtures, allowed to cure for 1 hr and then immersed in 400ml water for 24 hrs. 25ml of this water was then extracted and diluted to 100ml. A panel of at least 3 people conducted taste tests on this extract. A test "pass" required that at least 2 of the 3 must detect no flavor compared to a blank. Odor tests were carried out on the extract with a test "pass" also requiring 2 out of 3 people detecting no odor.

### 11. Mesamoll Analysis

The material is described as a mixture of C10-C18 alkyl sulfonic esters of phenol. Hence, the material is a mixture of compound having the following structure, wherein R is a C10-C18 alkyl group

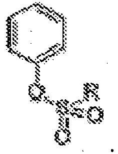

Gas chromatography - mass spectrometry (GC/MS) was used to analyze commercial Mesamoll. Abundant GC peaks were visible. Molecular ions were in ammonium ion form as ammonia was used as a chemical ionization reagent gas. These peaks correspond to ammonium ions of C14-C17 alkyl sulfonic esters of phenol as major components in Mesamoll. Multiple GC peaks were observed for each chain length, indicating there are multiple isomers for each of them. By extracted ion chromatogram (EIC), signals from ammonium ions of C 13, C18, C 19 alkyl sulfonic esters could also be extracted with much lower intensities. No clear signals from species with <C13 or >C19 chain length were observed. All of the EICs of various chain lengths share similar chromatographic peak distribution, suggesting that they have similar types of isomers. The results were as follows:

| [M+NH₄]⁺ Mass (m/z) | Molecular Weight (Da) | Alkyl Group (R-) | Number of isomers | GC Peak Area (including all isomers) | Signal Percentage (%, including all isomers) |
|---|---|---|---|---|---|
| 358 | 340 | C₁₃H₂₇ | ≥ 6 | 11505502 | 0.13 |
| 372 | 354 | C₁₄H₂₉ | ≥ 7 | 2789823247 | 32.18 |
| 386 | 368 | C₁₅H₃₁ | ≥ 7 | 3107690472 | 35.84 |
| 400 | 382 | C₁₆H₃₃ | ≥ 7 | 1751830719 | 20.21 |
| 414 | 396 | C₁₇H₃₅ | ≥ 8 | 902898853 | 10.41 |
| 428 | 410 | C₁₈H₃₇ | ≥ 8 | 83207271 | 0.96 |
| 442 | 424 | C₁₉H₃₉ | ≥ 4 | 23141899 | 0.27 |

### Materials

| **Material Name** | **Description** |
|---|---|
| Desmodur N3400 | Solvent-free aliphatic polyisocyanate resin based on hexamethylene diisocyanate (HDI). NCO content 21.8%. Viscosity 140 mPa·s @ 25°C. Commercially available from Bayer Material Science LLC, Pittsburg, PA. |
| Desmodur NZ1 | Solvent-free aliphatic polyisocyanate resin based on hexamethylene diisocyanate (HDI) and isophorone diisocyanate (IPDI). NCO content 20.0%. Viscosity 3,000 mPa·s @ 23°C. Commercially available from Bayer Material Science LLC, Pittsburg, PA. |
| Desmodur N3600 | Solvent free polyfunctional polyisocyanate resin based on hexamethylene diisocyanate (HDI). NCO content 23.0%. Viscosity 1200 mPa.s @23°C. Commercially available from Bayer Material Science LLC, Pittsburg, PA. |
| Desmodur XP2599 | Aliphatic prepolymer containing ether groups and based on hexamethylene-1,6-diisocyanate (HDI). Commercially available from Bayer Material Science LLC, Pittsburg, PA. |
| DER 331 | Bisphenol A diglycidyl ether epoxy resin commercially available from Dow Chemicals, Midland, MI |
| Cab-O-Sil TS720 | Medium surface area fumed silica which has been surface modified with polydimethylsiloxane. Commercially available from Cabot Corporation, Bilerica, MA |
| Purmol 3ST | Alkali aluminosilicate molecular sieve powder with 3 Angstrom pore diameter commercially available from Zeochem LLC., Louisville, KY. |
| TiPure R900 | Rutile titanium dioxide pigment manufactured by the chloride process for general interior coatings applications. Commercially available from DuPont Titanium Technologies, Wilmington, DE. |
| Omycarb 5-FL | A beneficiated calcium carbonate with an intermediate and closely sized particle distribution commercially available from Omya Inc., Proctor, VT. |
| Microdol H600 | Calcium magnesium-carbonate filler commercially available from Bentley Chemicals, Kidderminster, Worcestershire, UK |
| | Light-stable, aliphatic, cyclic, secondary diamine commercially available from Dorf Ketal Chemicals LLC, Stafford, TX. |
| Clearlink 1000 | 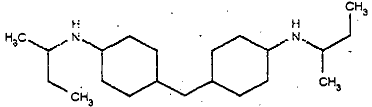 |
| Bayferrox 318M | Synthetic black iron oxide pigment commercially available from Lanxess, Pittsburg, PA |
| Barytes Grade B50 | Barium sulfate conunercially available from Viaton, Derbyshire, UK |
| Tiona 595 | Titanium dioxide pigment commercially available from Cristal Global, Australind, WA. |
| Mesamoll | Liquid mixture of alkylsulfonic phenyl ester commercially available from Lanxess, Pittsburg, PA |
| Edenol D81 | Epoxidised soya bean oil commercially available from Emery Oleochemicals, Dusseldorf, Germany. |
| Cardolite Lite 2513HP | Epoxidised cashew nutshell commercially available from Cardanol Chemicals, Belgium |
| Cardolite NC513 | Epoxidised cashew nutshell commercially available from Cardanol Chemicals, Belgium |
| Ethacure 100 | Aromatic diamine chain extender commercially available from Albemarle Corporation, Baton Rouge, LA |

### Resin Blending

Resin formulations were blended using a 3 HP, high speed dispersion Ross Mixer (Charles Ross and Son Company, St. Charles, IL) with a vacuum attachment. Formulation components were charged into a niixing vessel equipped with a Cowles mixing blade at 900 RPM over the course of 5 min. Then vacuum was applied to the mixing vessel and mixing continued for an additional 5 min at 1000 RPM.

### Pigment Dispersions

Pigment dispersions were blended using a 3 HP, high speed dispersion Ross Mixer (Charles Ross and Son Company, St. Charles, IL). Formulation components were charged into a mixing vessel equipped with a Cowles mixing blade at 900 RPM over the course of 5 min and mixed for an additional 10 min at 1000 RPM.

### Sample Production

The general process for producing a sample part for testing involved a) loading a two-part cartridge with Part A and Part B chemistries; b) heating the cartridge to 35-40°C; c) dispensing the cartridge using a pneumatic cartridge dispenser or mechanically driven cartridge dispensing system through a 3/8", 64 element static mixer made of commercially available static mixer elements such as those found in Brandywine Materials, LLC Burlington, MA Statomix MC 10-32; and d) dispensing the blended resin from the static mixer into a closed mold, open faced mold, or into a spinning cone where it was centrifugally applied to the interior of a pipe. When the blended resin is applied into a spinning cone, the spinning cone is placed onto a translational stage that moves within a pipe interior at a fixed speed. The volumetric flow rate of the applied resin is determined to coincide with the translational speed of the spinning cone relative to the interior of the pipe, thus it is possible to achieve a determined coating thickness. Post-lining coating measurements can be taken by using a caliper gauge such as a Mitutoyo Absolute IP 67 available from Mitutoya Corp., Japan.

### Examples 1-6

Resins and additives for Part A and Part B were blended as described under "Resin Blending" according to the formulations in Table 1 and 2 respectively.

A pigment dispersion was made by combining the amounts of Mesamoll, Tiona 595, and a portion of the Purmol 3ST as reported in Table 1 according to the previously described "Dispersion Blending" procedure. The weight ratio was 53.4 (Mesamoll) to 33.3 (Tiona 595) to 13.3 (Purmol 3ST). The remaining components of Part A were mixed together and the pigment dispersion (mixture of Mesamoll, Yiona 595, and Purmol 3ST) was added to this mixture.

Part A and B were then mixed as described under "Sample Production".

**Table 1 - Part A**

| MATERIAL | EX1 | EX2 | EX3 | EX4 | EX5 | EX6 |
|---|---|---|---|---|---|---|
| Desmodur NZ1 | 0 | 0 | 0 | 0 | 32.30 | 52.65 |
| Desmodur N3600 | 48.00 | 52.18 | 48.65 | 51.90 | 0 | 0 |
| Desmodur XP2599 | 16.00 | 17.39 | 16.22 | 12.97 | 15.30 | 22.57 |
| Tiona 595 | 1.00 | 1.00 | 1.00 | 1.00 | 1.33 | 1.00 |
| Cab-O-Sil TS720 | 1.70 | 1.80 | 1.50 | 1.50 | 0 | 1.90 |
| Purmol3ST | 4.25 | 2.00 | 2.00 | 2.00 | 2.03 | 1.25 |
| Omycarb 5-FL | 0 | 25.00 | 30.00 | 30.00 | 48.30 | 20.00 |
| Microdol H600 | 28.40 | 0 | 0 | 0 | 0 | 0 |
| Mesamoll | 0.65 | 0.63 | 0.63 | 0.63 | 0.83 | 0.63 |

**Table 2 - Part B**

| MATERIAL | EX1 | EX2 | EX3 | EX4 | EX5 | EX6 |
|---|---|---|---|---|---|---|
| Clearlink 1000 | 29.0 | 31.70 | 34.20 | 37.00 | 32.07 | 29.30 |
| Cab-O-Sil TS720 | 3.20 | 3.30 | 3.30 | 3.30 | 3.30 | 3.30 |
| Bayferrox 318M | 0.10 | 0.13 | 0.13 | 0.13 | 0.13 | 0.13 |
| Omycarb 5-FL | 0 | 64.87 | 62.37 | 59.57 | 64.50 | 67.27 |
| Microdol H600 | 67.70 | 0 | 0 | 0 | 0 | 0 |

Flavor and odor testing was conducted on Example 1. Each of the three panelists found this formulation to have no odor or flavor. Based on the similarities of components, Examples 2-6 would be expected to have similar flavor and odor testing results to Example 1.

### Comparative Examples ("CE") A-F and Examples 7-9

### Pigment Dispersions

Five pigment dispersions were made by combining 50 wt-% of the resin indicated in the following table, 40 wt-% titanium dioxide (Tiona 595), and 10 wt-% molecular sieve powder (Purmol 3ST) according to the previously described "Dispersion Blending" procedure.

| | Pigment Dispersion A | Pigment Dispersion B | Pigment Dispersion C | Pigment Dispersion D | Pigment Dispersion 1 |
|---|---|---|---|---|---|
| Resin | DER 331 | Edenol D81 | Cardolite Lite 2513HP | Cardolite NC513 | Mesamoll |

The general process for producing a sample part for testing a involved cooling both Part A and Part B to approximately 5°C and then mixing Part A with Part B at a weight ratio of 2.5:1 by hand.

### Part A

| MATERIAL | CEA | CEB | CEC | CED | EX7 | CEE | EX8 | CEF | EX9 |
|---|---|---|---|---|---|---|---|---|---|
| Desmodur N3400 | 46.82 | 46.82 | 46.82 | 46.82 | 46.82 | 32.14 | 32.14 | 36.35 | 36.35 |
| Desmodur XP2599 | 0 | 0 | 0 | 0 | 0 | 0 | 0 | 54.55 | 54.55 |
| Cab-O-Sil TS720 | 1.46 | 1.46 | 1.46 | 1.46 | 1.46 | 1.07 | 1.07 | 4.55 | 4.55 |
| Purmol 3ST | 2.38 | 2.38 | 2.38 | 2.38 | 2.38 | 1.64 | 1.64 | 0 | 0 |
| Microdol H600 | 29.73 | 29.73 | 29.73 | 29.73 | 29.73 | 0 | 0 | 0 | 0 |
| Barytes B50 | 0 | 0 | 0 | 0 | 0 | 51.7 | 51.7 | 0 | 0 |
| DER 331 | 11.67 | 0 | 0 | 0 | 0 | 8.0 | 0 | 0 | 0 |
| Edenol D 81 | 0 | 11.67 | 0 | 0 | 0 | 0 | 0 | 0 | 0 |
| Cardolite Lite 2513HP | 0 | 0 | 11.67 | 0 | 0 | 0 | 0 | 0 | 0 |
| Cardolite NC513 | 0 | 0 | 0 | 11.67 | 0 | 0 | 0 | 0 | 0 |
| Mesamoll | 0 | 0 | 0 | 0 | 11.67 | 0 | 8.0 | 0 | 0 |
| Pigment Dispersion A | 7.94 | 0 | 0 | 0 | 0 | 5.45 | 0 | 4:55 | 0 |
| Pigment Dispersion B | 0 | 7.94 | 0 | 0 | 0 | 0 | 0 | 0 | 0 |
| Pigment Dispersion C | 0 | 0 | 7.94 | 0 | 0 | 0 | 0 | 0 | 0 |
| Pigment Dispersion D | 0 | 0 | 0 | 7.94 | 0 | 0 | 0 | 0 | 0 |
| Pigment Dispersion 1 | 0 | 0 | 0 | 0 | 7.94 | 0 | 5.45 | 0 | 4.55 |

### Part B

| MATERIAL | CEA | CEB | CEC | CED | EX7 | CEE | EX 8 | CEF | EX9 |
|---|---|---|---|---|---|---|---|---|---|
| Ethacure 100 | 57.00 | 57.00 | 57.00 | 57.00 | 57.00 | 39.4 | 39.4 | 48.9 | 48.9 |
| Cab-O-Sil TS720 | 1.45 | 1.45 | 1.45 | 1.45 | 1.45 | 1.5 | 1.5 | 1.96 | 1.96 |
| Bayferrox 318M | 0.33 | 0.33 | 0.33 | 0.33 | 0.33 | 0.23 | 0.23 | 0.23 | 0.23 |
| Purmol 3 ST | 4.07 | 4.07 | 4.07 | 4.07 | 4.07 | 2.81 | 2.81 | 4.89 | 4.89 |
| Microdol H600 | 37.15 | 37.15 | 37.15 | 37.15 | 37.15 | 0 | 0 | 44.02 | 44.02 |
| Barytes B50 | 0 | 0 | 0 | 0 | 0 | 56.06 | 56.06 | 0 | 0 |

Flavor and odor testing was conducted on Comparative Examples ("CE") A-F and Examples 7-9. The results were as follows:

| | **Flavor** | **Odor** |
|---|---|---|
| CE A - DER 331 | Pass - no flavor | Pass - no odor |
| CE B - Edenol D81 | Fail - strong flavor | Fail - odor |
| CE C - Cardolite Lite 2513HP | Fail - strong flavor | Fail - strong odor |
| CE D Cardolite NC513 | Fail - flavor | Fail - odor |
| CE E - DER 331 | Pass - no flavor | Pass - no odor |
| CE F - DER 331 | Pass - no flavor | Pass - no odor |
| Example 7 - Mesamoll | Pass - no flavor | Pass - no odor |
| Example 8 - Mesamoll | Pass - no flavor | Pass - no odor |
| Example 9 - Mesamoll | Pass - no flavor | Pass - no odor |

Other physical properties of Examples 1-9 that were measured are reported as follows:

### Viscosity of Example 1 (spindle 6)

| **RPM** | **Part A (cP)** | | **Part B (cP)** | |
|---|---|---|---|---|
| 0.5 | 394000 | 324000 | 484000 | 322000 |
| 1 | 234000 | 166000 | 246000 | 134000 |
| 5 | 76800 | 53400 | 70000 | 42800 |
| 10 | 52300 | 32900 | 44000 | 25500 |
| 20 | 37600 | 22650 | 32000 | 17200 |
| °C | 23 | 40 | 23 | 41 |

### Viscosity of Examples 2-6

| | EX2 | EX3 | EX4 | EX5 | EX6 |
|---|---|---|---|---|---|
| Part A (cP) | 28450 | 37350 | 28950 | 25500 | 32400 |
| Part B (cP) | 29900 | 31300 | 15000 | 24950 | 32000 |

| | | | | | |
|---|---|---|---|---|---|
| * 23°C, 20 RPM | | | | | |

### Physical Properties of Reaction Product of Example 1

| | |
|---|---|
| Density g/cm³ | 1.46 |
| Tensile stress @ break | 40 |
| Tensile strain @ break | 5% |
| Hardness Shore D | 86 |
| Impact Resistance (J) | 16 @1.5 mm; >36 @6 mm |
| Abrasion resistance (mg loss per 1000 cycles | 180 |
| Tg °F (°C) | 205 (96) |
| Water absorption % in 24 hrs (21 days) | 0.76 (1.16 @ 28 days) |

### Physical Properties of Reaction Product of Examples 1-6

| | EX1 | EX2 | EX3 | EX4 | EX5 | EX6 |
|---|---|---|---|---|---|---|
| Flex modulus MPa | 3180 | 2393 | 2620 | 2299 | 2419 | 2131 |
| Flexural Strength MPa | 56 | 51 | 59 | 50 | 48 | 45 |
| ¹Total % volume of "fillers" | 27.6 | 25.9 | 26.1 | 24.8 | 24.8 | 25.8 |
| > 5 mm caliper in 1 coat pass? | Yes | Yes | Yes | Yes | Yes | Yes |
| ²NSF/ANSI 61-2008 compliant? | Yes | Yes | Yes | Yes | Yes | NM |
| % excess isocyanate | 30 | 30 | 20 | 20 | 30 | 20 |
| A:B volume mix ratio | 1:1 | 1:1 | 1:1 | 1:1 | 3:2 | 1:1 |

### Physical Properties of Reaction Product of Examples 7-9 and Comparative Examples

| | CEA | EX7 | CEE | EX8 | CEF | EX9 |
|---|---|---|---|---|---|---|
| Tensile strength @ break MPa | 27.4 | 25.9 | 31.2 | 24.6 | 19.2 | 19.0 |
| Tensile elongation @ break | 11 | 17 | 5 | 15 | 30% | 35% |
| Flex modulus MPa | NM | NM | 212 0 | 113 5 | 770 | 750 |
| Flexural Strength MPa | NM | NM | 39.9 | 28.5 | 25 | 25 |

| | | | | | | |
|---|---|---|---|---|---|---|
| NM=not measured | | | | | | |

## Claims

1. A method of forming a coating on surface of a pipeline the method comprising the steps of:
a) providing a coating composition comprising
a first part comprising at least one aliphatic polyisocyanate, and
a second part comprising at least one diamine;
wherein the coating composition comprises one or more alkyl phenyl ester compounds wherein the alkyl group comprises at least 8 carbon atoms;
b) combining the first part and the second part to form a liquid mixture;
c) applying the liquid mixture to internal surfaces of the pipeline; and
d) allowing the mixture to set forming a cured coating.

2. The method of claim 1 wherein the alkyl phenyl ester compound has the general formula
R-L-Ph
wherein R is an alkyl group comprising at least 8 carbon atoms,
L is a divalent linking group, and
Ph is phenyl.

3. The method of claims 1-2 wherein the alkyl phenyl ester compound has the general formula 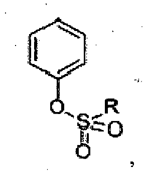 wherein R is an alkyl group comprising at least 8 carbon atoms.

4. The method of claims 1-3 wherein the alkyl group comprises at least 10 or 12 carbon atoms.

5. The method of claims 1-4 wherein the alkyl phenyl ester compound comprises a mixture of compounds having alkyl groups ranging from 12 to 20 carbon atoms.

6. The method of the previous claims wherein the coating composition is free of hydroxy-functional compounds.

7. The method of the previous claims wherein the coating composition further comprises a pigment.

8. The method of the previous claims wherein the alkyl phenyl ester compounds are present in an amount ranging from 0.2 to 5 wt-% of the total coating composition.

9. The method of claims 1-8 wherein the mixture of alkyl phenyl ester compounds are present in an amount ranging from 5 wt-% to 20 wt-% of the total coating composition.

10. The method of the previous claims wherein the pipeline is a drinking water pipeline and the cured coating comes in contact with the drinking water.

11. The method of any of the previous claims wherein the second part comprises one or more of the aliphatic cyclic secondary diamine(s) in an amount ranging from 25 wt-% to 100 wt-% of the second part.

12. The method of the previous claims wherein the total composition comprises about 15% to about 45% by volume inorganic particulate filler.

13. The method of the previous claims wherein the first part comprises an aliphatic polyisocyanate that is substantially free of isocyanate monomer.

14. The method of the previous claims wherein the first part is combined with the second part at a volume ratio of about 1:1 to 2.5:1.

15. A pipeline comprising an internal surface comprising the reaction product of the coating composition described in claims 1-14.

## Patentansprüche

1. Verfahren zum Bilden einer Beschichtung auf einer Oberfläche einer Rohrleitung, wobei das Verfahren folgende Schritte umfasst:
a) das Bereitstellen einer Beschichtungszusammensetzung, die Folgendes umfasst:
einen ersten Teil, der mindestens ein aliphatisches Polyisocyanat umfasst, und
einen zweiten Teil, der mindestens ein Diamin umfasst;
wobei die Beschichtungszusammensetzung eine oder mehrere Alkylphenylesterverbindungen umfasst, wobei die Alkylgruppe mindestens 8 Kohlenstoffatome umfasst;
b) das Vermengen des ersten Teils und des zweiten Teils zum Bilden einer flüssigen Mischung;
c) das Auftragen der flüssigen Mischung auf die Innenflächen der Rohrleitung; und
d) das Härtenlassen der Mischung, um eine gehärtete Beschichtung zu bilden.

2. Verfahren nach Anspruch 1, wobei die Alkylphenylesterzusammensetzung folgende allgemeine Formel aufweist:
R-L-Ph
wobei R eine Alkylgruppe ist, die mindestens 8 Kohlenstoffatome umfasst,
L eine divalente Verbindungsgruppe ist, und
Ph Phenyl ist.

3. Verfahren nach den Ansprüchen 1 bis 2, wobei die Alkylphenylesterzusammensetzung folgende allgemeine Formel aufweist: 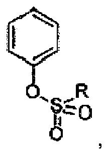 wobei R eine Alkylgruppe ist, die mindestens 8 Kohlenstoffatome umfasst.

4. Verfahren nach den Ansprüchen 1 bis 3, wobei die Alkylgruppe mindestens 10 oder 12 Kohlenstoffatome umfasst.

5. Verfahren nach den Ansprüchen 1 bis 4, wobei die Alkylphenylesterzusammensetzung eine Mischung aus Verbindungen mit Alkylgruppen mit 12 bis 20 Kohlenstoffatomen umfasst.

6. Verfahren nach den vorstehenden Ansprüchen, wobei die Beschichtungszusammensetzung frei von hydroxyfunktionellen Verbindungen ist.

7. Verfahren nach den vorstehenden Ansprüchen, wobei die Beschichtungszusammensetzung ferner ein Pigment umfasst.

8. Verfahren nach den vorstehenden Ansprüchen, wobei die Alkylphenylesterzusammensetzungen in einer Konzentration von 0,2 bis 5 Gew.-% der Gesamtbeschichtungszusammensetzung vorhanden sind.

9. Verfahren nach den Ansprüchen 1 bis 8, wobei die Mischung aus Alkylphenylesterzusammensetzungen in einer Konzentration von 5 Gew.-% bis 20 Gew.-% der Gesamtbeschichtungszusammensetzung vorhanden ist.

10. Verfahren nach den vorstehenden Ansprüchen, wobei die Rohrleitung eine Trinkwasserrohrleitung ist und die gehärtete Beschichtung in Kontakt mit dem Trinkwasser kommt.

11. Verfahren nach einem der vorstehenden Ansprüche, wobei der zweite Teil eines oder mehrere der aliphatischen cyclischen sekundären Diamine in einer Konzentration im Bereich von 25 Gew.-% bis 100 Gew.-% des zweiten Teils umfasst.

12. Verfahren nach den vorstehenden Ansprüchen, wobei die Gesamtzusammensetzung volumenbezogen etwa 15 % bis etwa 45 % an anorganischem teilchenförmigen Füllstoff umfasst.

13. Verfahren nach den vorstehenden Ansprüchen, wobei der erste Teil ein aliphatisches Polyisocyanat umfasst, das im Wesentlichen frei von Isocyanatmonomer ist.

14. Verfahren nach den vorstehenden Ansprüchen, wobei der erste Teil mit dem zweiten Teil in einem Volumenverhältnis von etwa 1:1 bis 2,5:1 vermengt wird.

15. Rohrleitung mit einer Innenfläche, die das Umsetzungsprodukt der in den Ansprüchen 1 bis 14 beschriebenen Beschichtungszusammensetzung umfasst.

## Revendications

1. Procédé de formation d'un revêtement sur une surface d'une conduite, le procédé comprenant les étapes consistant à :
a) fournir une composition de revêtement comprenant
une première partie comprenant au moins un poly-isocyanate aliphatique, et
une deuxième partie comprenant au moins une diamine ;
dans lequel la composition de revêtement comprend un ou plusieurs composés ester d'alkylphényle dans lequel le groupe alkyle comprend au moins 8 atomes de carbone ;
b) combiner la première partie et la deuxième partie pour former un mélange liquide ;
c) appliquer le mélange liquide sur les surfaces internes de la conduite ; et
d) laisser le mélange prendre en formant un revêtement durci.

2. Procédé selon la revendication 1, dans lequel le composé ester d'alkylphényle est de formule générale
R-L-Ph
dans laquelle R est un groupe alkyle comprenant au moins 8 atomes de carbone,
L est un groupe de liaison divalent, et
Ph est phényle.

3. Procédé selon les revendications 1 à 2, dans lequel le composé ester d'alkylphényle est de formule générale 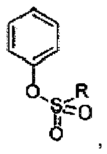 dans laquelle R est un groupe alkyle comprenant au moins 8 atomes de carbone.

4. Procédé selon les revendications 1 à 3, dans lequel le groupe alkyle comprend au moins 10 ou 12 atomes de carbone.

5. Procédé selon les revendications 1 à 4, dans lequel le composé ester d'alkylphényle comprend un mélange de composés possédant des groupes alkyle allant de 12 à 20 atomes de carbone.

6. Procédé selon les revendications précédentes, dans lequel la composition de revêtement est exempte de composés à fonction hydroxy.

7. Procédé selon les revendications précédentes, dans lequel la composition de revêtement comprend en outre un pigment.

8. Procédé selon les revendications précédentes, dans lequel les composés ester d'alkylphényle sont présents en une quantité allant de 0,2 à 5 % en poids de la composition de revêtement totale.

9. Procédé selon les revendications 1 à 8, dans lequel le mélange de composés ester d'alkylphényle est présent en une quantité allant de 5 % en poids à 20 % en poids de la composition de revêtement totale.

10. Procédé selon les revendications précédentes, dans lequel la conduite est une conduite d'eau potable et le revêtement durci vient en contact avec l'eau potable.

11. Procédé selon l'une quelconque des revendications précédentes, dans lequel la deuxième partie comprend une ou plusieurs de la ou des diamine(s) secondaire(s) cyclique(s) aliphatique(s) en une quantité allant de 25 % en poids à 100 % en poids de la deuxième partie.

12. Procédé selon les revendications précédentes, dans lequel la composition totale comprend environ 15 % à environ 45 % en volume de charge particulaire inorganique.

13. Procédé selon les revendications précédentes, dans lequel la première partie comprend un poly-isocyanate aliphatique qui est essentiellement dépourvu de monomère isocyanate.

14. Procédé selon les revendications précédentes, dans lequel la première partie est combinée avec la deuxième partie à un rapport volumique d'environ 1:1 à 2,5:1.

15. Conduite comprenant une surface interne comprenant le produit de réaction de la composition de revêtement décrite dans les revendications 1 à 14.
